# EUROPEAN PATENT SPECIFICATION

(11) **EP 1 030 970 B1**
(45) Date of publication and mention of the grant of the patent: **18.12.2002**
(21) Application number: 97948049.8
(22) Date of filing: 28.10.1997
(51) Int. Cl.: F03B 13/20

(54) **WAVE ENERGY CONVERTER**
KONVERTER FÜR WELLENENERGIE
CONVERTISSEUR D'ENERGIE ONDULATOIRE

(43) Date of publication of application: 30.08.2000
(73) Proprietor: IPS INTERPROJECT SERVICE AB, 640 33 Bettna (SE)
(72) Inventor: SJÖSTRÖM, Bengt-Olov, S-417 22 Göteborg (SE); CLAESSON, Lennart, S-424 50 Angered (SE); NOREN, Anders, S-182 65 Djursholm (SE)
(74) Representative: Nyberg, Bengt
(86) International application number: SE9701793
(87) International publication number: WO99022137

(56) References cited:
- DE-A1- 3 938 667
- SE-A- 9 601 636
- US-A- 3 870 893
- US-A- 4 076 463
- US-A- 4 773 221

## Description

This invention relates to a wave energy converter of the kind defined in the precharacterising part of claim 1.

Wave energy converters of this kind, which are sometimes referred to as point absorbers or heaving-buoy wave energy converters, are known from, for example, US-A-4 773 221. The operation of this particular converter is based on relative motion between, on the one hand, a buoyant body and a so-called acceleration tube attached to the buoyant body, and, on the other hand, a reciprocable working piston in the acceleration tube; this relative motion is caused by the waves in which the converter operates.

In operation of a wave energy converter of this kind, the working piston and other masses coupled to it, including columns of water on both sides of the working piston, form an inertial system which has no positive coupling to the buoyant body and the acceleration tube in the vertical direction, that is, in the direction of the axis of the acceleration tube.

The operation of the converter is governed by the relationship between the two relatively movable systems and by the movements, wave motion and heave of the sea, in the water. Optimal operation of the converter requires the oscillating system to be adjusted to the current situation in the sea. This means, among other things, that the oscillating system should always be adapted to the current wave amplitude and frequency such that the converter has a resonant frequency near the current wave frequency. Accordingly, there is a need for adjustability of the resonant frequency of the converter.

A primary object of the invention is to provide a wave energy converter which is capable of operating at different resonant frequencies.

This object is achieved by constructing the wave energy converter as set forth in the independent claim. Features of preferred embodiments are defined in the dependent claims.

As is explained in greater detail below, the wave energy converter according to the invention comprises means for selectively enclosing in the acceleration tube a certain amount of water so that it becomes part of the oscillating system formed by the buoyant body and the acceleration tube. The amount of water which is enclosed in the acceleration tube may be smaller or larger, depending on the current situation, so that the resonant characteristics of the wave energy converter will be favourable in that situation.

The invention will be described in greater detail below with reference to the accompanying drawings.
Fig. 1 is a diagrammatic perspective view of a wave energy converter of the kind with which the invention is concerned;
Fig. 2 is a vertical sectional view of the wave energy converter shown in Fig. 1;
Fig. 3 is a vertical sectional view drawn to a larger scale of a section of the acceleration tube of the wave energy converter shown in Figs. 1 and 2.

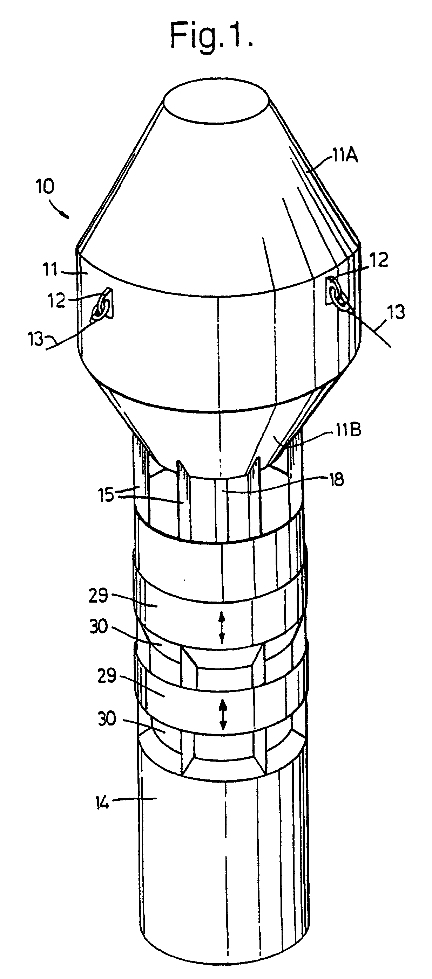

The wave energy converter 10 shown in Fig. 1 embodies the principles of construction and operation described in US-A-4 773 221. It accordingly comprises a buoyant unit or body 11 provided with attachment lugs 12 for mooring lines 13, and a so-called acceleration tube 14 which depends from the buoyant body 11 and is attached to it by circumferentially spaced longitudinally extending radial webs 15 leaving large openings between them.

As in the wave energy converter of the above-mentioned patent, the acceleration tube 14 is open at both ends so that water can flow freely into and out of it.

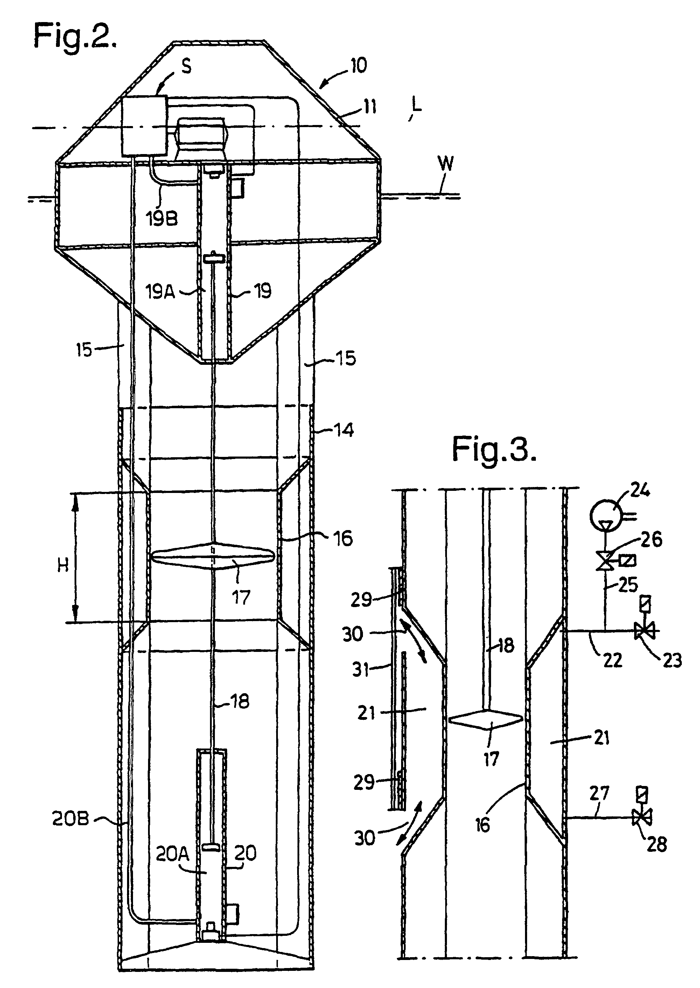

As is illustrated in greater detail in Fig. 2, the buoyant body 11 and the acceleration tube 14 accommodate apparatus for converting wave-generated vertical oscillations of the buoyant body 11 and the acceleration tube 14 to electrical energy.

In operation of the wave energy converter 10 the entire acceleration tube 14 and the lower portion of the buoyant body 11 are immersed in water. The mooring lines 13 keep the wave energy converter 10 in a selected offshore position horizontally but permit it to oscillate vertically under the influence of the waves.

Referring to Fig. 2, a section of the acceleration tube 14 between the upper and lower ends thereof defines a working cylinder 16 in which a double-acting working piston 17 is reciprocable in the longitudinal direction of the acceleration tube.

The working piston 17 is secured to a piston rod 18 approximately halfway between the ends thereof. A pair of single-acting hydraulic piston pumps 19, 20 are associated with the ends of the piston rod to operate in push-pull fashion. The upper pump 19 is accommodated in the buoyant body 11 while the lower pump 20 is accommodated in the lower portion of the acceleration tube 14.

The pump chambers 19A, 20A of the pumps 19, 20 are connected to an energy absorbing device S in the buoyant body 11 through hydraulic fluid lines 19B, 20B. The energy absorbing device S, the detailed construction of which forms no part of the invention, may be of the kind shown and described in US-A-4 277 690.

The length or height H of the working cylinder 16 is chosen such that the working piston 17 will normally reciprocate within the working cylinder, in which it forms a barrier to flow of water through the working cylinder. However, there is a possibility for the working piston 17 to move in either direction beyond the end of the working cylinder 16.

To prevent overloading of the piston rod 18 in case the working piston 17 is driven past the end of the working cylinder 16, e.g. in response to a very high heaving of the buoyant body and the acceleration tube, a relief system is provided at each end of the working cylinder. This relief system operates as described in US-A-4 773 221 to substantially relieve the working piston 17 from fluid forces when it moves out of the working cylinder 16 so that further movement of the working piston in the same direction is limited.

To provide for such relief, the working cylinder 16, which is fully open toward the upper and lower sections of the acceleration tube 14, is narrower than the adjoining portions of the acceleration tube. Accordingly, as soon as the working piston 17 moves beyond one end of the working cylinder 16, water can flow more or less freely through a passage formed between the periphery of the working piston and the inner wall of the acceleration tube 14 at the wider portion thereof. In other words, a substantially unrestricted flow path is established between the open upper and lower ends of the acceleration tube 14.

Outside the working cylinder 16 there is a circumferentially extending fluid compartment 21 which can be selectively filled with water or air, partially or completely, so that a smaller or larger amount of water can be trapped in the acceleration tube 14 and add to the mass oscillating together with the buoyant body 11 and the acceleration tube 14. Equipment for controlling the filling and emptying of the fluid compartment 21 may be provided in the buoyant body 11 and is shown diagrammatically in Figs. 1 and 3.

Within the scope of the invention, the fluid compartment 21 may be used in different ways, depending on the actual wave situation. For example, the fluid compartment may be open both at the upper end and at the lower end, so that although the fluid compartment is completely filled with water the acceleration tube 14 can oscillate without the water in the fluid compartment adding to the oscillating mass.

If it is desired to increase the oscillating mass, the fluid compartment 21 may be sealed off when filled with a desired amount of water. If the mass that it is desired to add is smaller than that which corresponds to a complete filling of the fluid compartment, that portion of the fluid compartment which is not occupied by water is filled with a gas, typically air. The trapped volume of gas of course will add to the buoyancy of the acceleration tube 14 and thereby the buoyancy of the oscillating unit which consists of the buoyant body 11 and the acceleration tube 14.

Fig. 3 diagrammatically illustrates how the filling of the compartment 21 and trapping of water or air or both can be accomplished.

Referring first to the right-hand side of Fig. 3, one end of a conduit 22 opens into the upper end of the fluid compartment 21 while the other end opens into the body of water in which the acceleration tube 14 is submerged. A solenoid operated shut-off valve 23 controls the flow through the conduit 22 between the fluid compartment 21 and the surrounding body of water. An air pump 24 feeds compressed air through a conduit 25 which is connected to the conduit 22 between the fluid compartment 21 and the shut-off valve 23. A solenoid operated shut-off valve 26 controls the flow of air through the conduit 25.

One end of a third conduit 27 opens into the lower end of the fluid compartment. The other end opens into the surrounding body of water. A solenoid operated shut-off valve 28 controls the flow of water through the conduit 27.

Assuming first that the fluid compartment 21 is initially filled with air and that it is desired to replace a portion or all of the air with water, valve 26 is closed and valves 23 and 28 are opened. The water surrounding the acceleration tube 14 will enter the fluid compartment 21 and discharge the air therein through the conduit 22 into the water. Valves 23 and 28 are shut when the desired quantity of water has entered the fluid compartment.

If it is then desired to remove, partially or completely. the water from the fluid compartment 21, valves 26 and 28 are opened to allow compressed air from the pump 24 to enter the upper end of the fluid compartment through the conduit 22 and discharge the water through the conduit 27.

Fig. 1 and the left-hand side of Fig. 3 show a modified valve arrangement which permits the surrounding water either to pass substantially without restriction through the fluid compartment 21 during the vertical oscillations of the acceleration tube 14 or to be trapped in the fluid compartment so as to be forced to oscillate together with the acceleration tube.

This valve arrangement comprises a pair of axially spaced sleeve-like valve members 29 which are axially slideable on the outer side of the acceleration tube 14. The valve members 29 are positioned at respectively the upper and lower end of the fluid compartment. They can be displaced between an open position, the position illustrated in Figs. 1 and 3, in which lateral openings 30 in the acceleration tube 14 are open to allow substantially unrestricted flow of water into and out of the fluid compartment 21, and a closed position (not shown), in which the water in the fluid compartment is trapped so that it will oscillate together with the acceleration tube. A mechanism for actuating the valve members 29 in unison is indicated at 31.

The operation of the valves in Figs. 2 and 3 can be controlled by means of a control device positioned in the buoyant body 11 and supplied with energy from a battery or a generator which forms part of the energy absorbing device S. The control device may include means for assessing the wave condition or wave parameters of the water in which the wave energy converter operates, such as the prevailing wave frequency and amplitude, and for adapting the amount of water and/or air trapped in the fluid compartment 21 in accordance with the assessed parameters.

The effect of the above-described arrangement for varying the oscillating mass of the unit consisting of the buoyant body 11 and the acceleration tube 14 can be amplified by a suitable choice of the shape of the upper portion of the buoyant body 11, namely that portion which may or may not be under the water, depending on whether or not an added mass of water is present in the fluid compartment.

If that portion is shaped in such a manner that the change of displacement of the buoyant body 11 per unit length of immersion depth will be different for different portions of the buoyant body, a suitable choice of the shape, that is, the displacement versus immersion depth characteristic, offers a possibility to further improve the performance of the wave energy converter, because the spring constant of the buoyant body can thereby be influenced in such a way that the resonant frequency change caused by the variation of the added mass will be amplified.

Figs. 1 and 2 show an example of a favourable shape of the upper part of the buoyant body 11. The uppermost portion 11A is frusto-conical while the adjacent lower portion liB is cylindrical. If the immersion depth is increased such that the waterline will be at the frusto-conical portion 11A as indicated by a dash-dot line L, the change of the displacement for one unit length of changed immersion depth will be considerably smaller than when the waterline is at the cylindrical portion 11B as indicated by the water surface W.

## Claims

1. A wave energy converter (10) comprising
a buoyant body (11),
an acceleration tube (14) for submersion in a body of water, said acceleration tube being dependent from and attached to the buoyant body (11),
a working piston (17) reciprocable in the acceleration tube (14), and
an energy-absorbing device (S) operatively connected with the working piston (17),
**characterised by**
means on the acceleration tube (14) defining a fluid compartment (21), and
passage means for passing water from said body of water into and out of the compartment.

2. A wave energy converter according to claim 1, **characterised by** a control valve provided in said passage means, means for actuating the control valve and means for selective introduction of a gas, such as air, into the fluid compartment (21) and passing the gas out of the fluid compartment.

3. A wave energy converter according to claim 1 or 2, **characterised by** means for assessing the wave conditions in said body of water and controlling the degree of filling of the fluid compartment with water in accordance with the assessed wave conditions.

4. A wave energy converter according to any one of claims 1-3, **characterised in that** the shape of a portion of the buoyant body (11) is such as to vary the change of the displacement of the buoyant body per unit length of immersion as a function of the depth of immersion of the buoyant body.

5. A wave energy converter according to claim 4, **characterised in that** the buoyant body (11) comprises a top portion whose cross-sectional area, as measured in planes substantially perpendicular to the axis of the acceleration tube, diminishes gradually in the upward direction.

## Patentansprüche

1. Wellenenergiekonverter (10) enthaltend
einen Schwimmkörper (11),
ein Beschleunigungsrohr (14) zur Versenkung in einem Wasserkörper, wobei das Beschelunigungsrohr an dem Schwimmkörper (11) hängt und daran angebracht ist,
einen Arbeitskolben (17), welcher in dem Beschleunigungsrohr (14) hin und her beweglich ist, und
eine energieabsorbierende Vorrichtung (S), welche mit dem Arbeitskolben (17) betriebsmäßig verbunden ist,
**gekennzeichnet durch**
Mittel auf dem Beschleunigungsrohr (14), welche ein Fluidabteil (21) definieren, und
Durchtrittsmittel zum Durchtreten von Wasser aus dem Wasserkörper in das Abteil und aus diesem heraus.

2. Wellenenergiekonverter nach Anspruch 1, **gekennzeichnet durch** ein Steuerungsventil, welches in den Durchtrittsmitteln zur Verfügung steht, Mittel zum Betätigen des Steuerungsventils und Mittel zur ausgewählten Einleitung von Gas, wie z. B. Luft, in das Fluidabteil (21) und Leiten des Gases aus dem Fluidabteil heraus.

3. Wellenenergiekonverter nach Anspruch 1 oder 2, **gekennzeichnet durch** Mittel zum Bestimmen der Wellenzustände in dem Wasserkörper und zum Steuern des Füllgrades des Fluidabteils mit Wasser entsprechend den bestimmten Wellenzuständen.

4. Wellenenergiekonverter gemäß einem der Ansprüche 1 - 3, **dadurch gekennzeichnet, dass** die Gestalt eines Abschnittes des Schwimmkörpers (11) so ist, dass der Wechsel der Verschiebung des Schwimmkörpers pro Eintauchlängeneinheit als Funktion der Eintauchtiefe des Schwimmkörpers verändert wird.

5. Wellenenergiekonverter nach Anspruch 4, **dadurch gekennzeichnet, dass** der Schwimmkörper (11) einen oberen Abschnitt enthält, dessen Querschnittsfläche, in Ebenen im Wesentlichen senkrecht zu der Achse des Beschleunigungsrohres gemessen, sich allmählich in Aufwärtsrichtung verringert.

## Revendications

1. Convertisseur d'énergie de la houle (10) comprenant :
un corps flottant (11),
un tube d'accélération (14) propre à être immergé dans une masse d'eau, ledit tube d'accélération étant dépendant du corps flottant (11) et fixé à celui-ci,
un piston de travail (17) déplaçable en va-et-vient dans le tube d'accélération (14), et
un dispositif d'absorption d'énergie (S) relié de manière fonctionnelle au piston de travail (17),
**caractérisé par**
des moyens sur le tube d'accélération (14) définissant un compartiment à fluide (21), et
des moyens de passage pour faire entrer et sortir de l'eau de ladite masse d'eau dans le compartiment et hors de celui-ci.

2. Convertisseur d'énergie de la houle selon la revendication 1, **caractérisé par** une vanne de commande installée dans lesdits moyens de passage, des moyens pour actionner la vanne de commande et des moyens pour l'introduction sélective d'un gaz, tel que l'air, dans le compartiment à fluide (21) et faire sortir le gaz du compartiment à fluide.

3. Convertisseur d'énergie de la houle selon la revendication 1 ou 2, **caractérisé par** des moyens pour déterminer la condition des vagues dans ladite masse d'eau et commander le degré de remplissage du compartiment à fluide avec de l'eau selon les conditions déterminées des vagues.

4. Convertisseur d'énergie de la houle selon l'une des revendications 1 à 3, **caractérisé en ce que** la forme de la partie du corps flottant (11) est telle qu'elle fait varier le changement du déplacement du corps flottant par unité de longueur d'immersion en fonction de la profondeur d'immersion du corps flottant.

5. Convertisseur d'énergie de la houle selon la revendication 4, **caractérisé en ce que** le corps flottant (11) comprend une partie supérieure dont la section transversale, comme mesurée dans des plans sensiblement perpendiculaires par rapport à l'axe du tube d'accélération, diminue progressivement dans la direction ascendante.
